# EUROPEAN PATENT SPECIFICATION

(11) **EP 3 376 362 B1**
(45) Date of publication and mention of the grant of the patent: **16.10.2019**
(21) Application number: 18160673.2
(22) Date of filing: 08.03.2018
(51) Int. Cl.: G06F 3/12, G06K 15/16, H04N 1/00, G06K 15/00

(54) **PRINTING SYSTEM WITH MULTIPLE PHYSICAL CONFIGURATIONS AND A METHOD THEREFOR**
DRUCKSYSTEM MIT MEHREREN PHYSISCHEN KONFIGURATIONEN UND VERFAHREN DAFÜR
SYSTÈME D'IMPRESSION AYANT DE MULTIPLES CONFIGURATIONS PHYSIQUES ET PROCÉDÉ ASSOCIÉ

(30) Priority: 15.03.2017 EP 17161099
(43) Date of publication of application: 19.09.2018
(73) Proprietor: OCE HOLDING B.V., 5914 CA Venlo (NL)
(72) Inventor: MENEZES, Vinod J., 5914 CA Venlo (NL)
(74) Representative: OCE IP Department

(56) References cited:
- EP-A1- 1 473 661
- EP-A1- 3 091 431
- US-A1- 2003 067 618
- US-A1- 2010 053 663

## Description

### TECHNICAL FIELD OF THE PRESENT INVENTION

The present invention relates to a printing system comprising a controller for controlling the processing of print jobs, a plurality of input holders for holding print media to be printed upon, a print engine for disposing marking material on the print media, and a plurality of output holders for holding the print media when the marking material has been disposed on the print media by the print engine and the print media is ready for taking out by an operator.

The print media may be a paper, a plastic, or a textile. The marking material may be an ink or a toner. The print engine may also be called a print head or print assembly.

The plurality of input holders, the plurality of output holders and the print engine will also be called resources or modules. An output holder may comprise finishing equipment and may therefore also be called a finisher where appropriate.

The printing system may comprise an inline finisher like a stapler which is positioned between the print engine and the plurality of output holders.

Patent application US 2010/053663 describes a printing system which comprises user selectable input holders and output holders.

### BACKGROUND OF THE PRESENT INVENTION

In the paper path of a printing system each of the plurality of sheets is transported from an input section of the printing system towards at least one a print head or print assembly. The input section of the printing system comprises the plurality of input holders. By means of the at least one print head or print assembly marking material is disposed on each of the plurality of sheets or rolls. Each of the plurality of sheets is transported from the at least one print head or print assembly towards an output section of the printing system. The output section of the printing system comprises the plurality of output holders.

A problem arises when printing system has to be shared by multiple people or groups. Such a sharing may be time based or based on pre-agreed shared resources like the input holders and the output holders. A time based sharing will not allow usage in parallel. When sharing the printing system on pre-agreed shared resources errors may cause mixing up of print jobs when the print job submitters are located in a remote location of the printing system. It is also difficult for a printer operator to maintain the print media and finisher resource usage between groups, for example, if the groups have a separate account for payments.

It is an object of the present invention to provide a printing system that permits usage of the printing system by people or groups in parallel.

### SUMMARY OF THE PRESENT INVENTION

In order to achieve this object, according to the present invention, the controller is configured to establish and to maintain a plurality of physical configurations of the printing system, each physical configuration comprising the print engine, at least one input holder out of the plurality of input holders and at least one output holder out of the plurality of output holders, wherein each physical configuration is disjunctive from the at least one other physical configuration of the plurality of physical configurations with respect to the at least one input holder of the at least one other physical configuration of the plurality of physical configurations and with respect to the at least one output holder of the at least one other physical configuration of the plurality of physical configurations. A physical configuration of the printing system according to the invention is defined as a module set of at least one input holder, the print engine and at least one output holder, and the modules of the module set are capable of working together to lead print media from an input holder via the print engine to an output holder of the printing system. By creating unique physical configurations with respect to the input holders and with respect to the output holders, users of a particular configuration get access to the resources - input holders and output holders - which are part of the particular physical configuration. The controller is capable of allowing an administrator of the printing system to define and to maintain the physical configurations.

According to the invention, the controller is configured to establish and to maintain a user group of users, the user group is authorized to use one physical configuration of the printing system. One user group will not use print media attributed to another group via the input holder being part of a physical configuration of the other group. Prints made by one group will not end up in an output holder being part of a physical configuration of another group. Clear separation per group helps an operator running the printing system to load input holders with print media from a correct stock if each group maintains a separate stock. The operator can also take out the printed outputs and store the printed outputs to the appropriate stores of containers of a group since the output holders of the physical configurations corresponding to the groups are known to the operator. According to an embodiment the printing system comprises a user interface for creating a user group per physical configuration of the printing system.

According to the invention, the user interface is configured to display dedicated user interface windows for a user group, each of the user interface windows comprising functionality limited to the physical configuration corresponding to the user group. By doing so, a user group is blocked from accessing input holders and output holders of other configurations coupled to other user groups. Also the user interface windows are simplified. For example, a user interface window contains only finishing options relevant for the user group linked to the particular physical configuration. Only finishing options which can be executed by the particular physical configuration are shown on the user interface window. If a particular user group owns a first input tray, the first input tray will not be visible on the user interface windows accessed by other user groups than the particular user group. This way of working makes sure that the first input tray is not used by other user groups.

According to an embodiment the plurality of input holders comprise roll holders for holding at least one roll of media.

According to an embodiment an output holder of the printing system is part of a finisher of the printed print media. By attributing the output holders to a particular physical configuration, the finishing capabilities of the particular configuration are determined by the finisher comprising the output holder. It may also be interpreted the other way around: the output holder may be seen as a finisher and the output capabilities comprise the finishing options of the built-in finisher.

According to an embodiment, the printing system is configured to receive a print job from a job submission tool which comprises a dedicated job submission window for each user group of users, the dedicated job submission window being limited to functionality with respect to the physical configuration corresponding to the user group. The job submission device gets different configuration information for the controller for each user group and displays capabilities of the particular physical configuration linked to the user group. So each user group, for example, sees only relevant input holder, output holder and finishing options. The job submission device may be a printer driver but may also be any remote user interface getting the particular physical configuration from the controller of the printing system according to the invention and submitting print jobs to the controller. The controller is capable of filtering capabilities of a particular physical configuration out of the printing system according to the invention.

The invention also relates to a method for printing on a printing system according to the invention, wherein the method comprises the steps of receiving a print job from a user of a user group corresponding to a particular physical configuration of the printing system, printing the print job on print media from an input holder of the particular physical configuration of the printing system, and receiving the printed print media in an output holder of the particular physical configuration of the printing system.

According to an embodiment, the method comprises for a particular printing system the steps of receiving a print job at a job submission device according to the invention, retrieving digital data of the particular physical configuration of the printing system corresponding to the user group of the user from a controller of the printing system by the job submission device, and displaying and enabling by the job submission device of a use of functionality for job submission, the use being limited to job submission to the particular physical configuration.

According to an embodiment of the method the digital data of the particular physical configuration comprises an identification, a specification and a status of the at least one input holder of the particular physical configuration, and an identification, a specification and a status of the at least one output holder of the particular physical configuration.

According to an embodiment of the method the digital data comprises an account log of the particular physical configuration, the account log comprising marking material usage, number of sheets printed and a total time spent printing on the particular configuration.

The invention also relates to a software product comprising program code on a non-transitory computer-readable medium, wherein said program code, when loaded into a computer that is connected to a printing system according to the invention causes the computer to act according to a method according to the invention.

### BRIEF DESCRIPTION OF THE DRAWINGS

Preferred embodiments will now be described in conjunction with the drawings, wherein:
- FIG. 1: is a schematic view of the printing system according to the present invention;
- FIG. 2(a): is a schematic view of the order of the sections of the printing system according to the present invention;
- FIG. 2(b): is a schematic view of the input and output holder of the printing system shown in FIG. 1;
- FIG. 3: is a schematic view of a first physical configuration of the printing system shown in FIG. 1 according to the present invention;
- FIG. 4: is a schematic view of a second physical configuration of the printing system shown in FIG. 1 according to the present invention.
- FIG. 5: is a schematic view of job submission devices according to the present invention;
- FIG. 6 - 9: are schematic user interface windows of a job submission device according to the present invention;
- FIG. 10: is a flow diagram of an embodiment of the method according to the present invention; and
- FIG. 11: is a flow diagram of a further embodiment of the method according to the present invention.

### DETAILED DESCRIPTION OF THE PREFERRED EMBODIMENTS

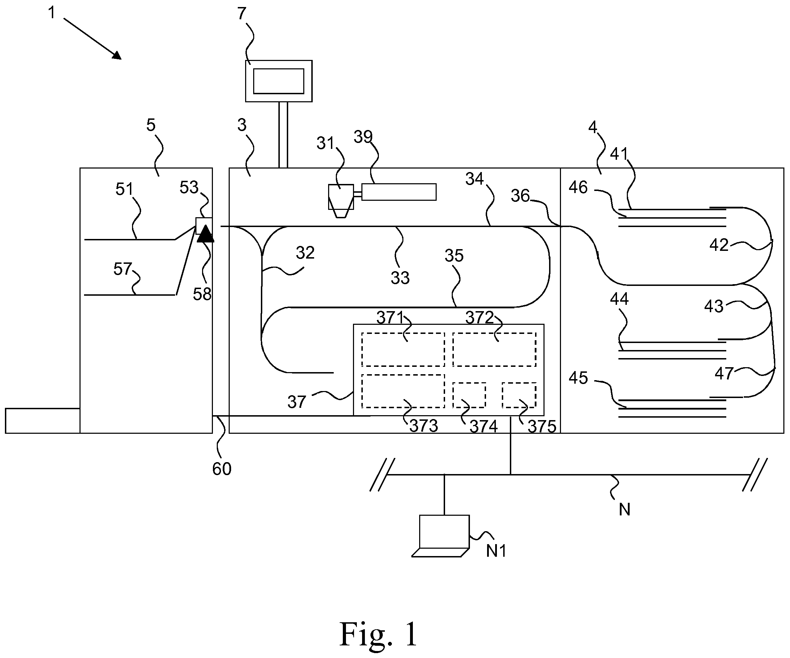

FIG. 1 shows schematically an embodiment of a printing system 1 according to the present invention. The printing system 1, for purposes of explanation, is divided into an output section 5, a print engine and control section 3, a local user interface 7 and an input section 4. While a specific printing system is shown and described, the disclosed embodiments may be used with other types of printing system such as an ink jet print system, an electrographic print system, etc.

The output section 5 comprises a first output holder 51 for holding print media of a printed image receiving material, for example a plurality of sheets, a roll of paper, etc. The output section 5 comprises a second output holder 57. While 2 output holders 51, 57 are illustrated in FIG. 1, the number of output holders may include two, three or more output holders. The printed image receiving material is transported from the print engine and control section 3 via an inlet 53 to the output section 5. An operator of the printing system 1 may take the printed print media from the output holders 51, 57 for further processing.

The output section 5 is digitally connected by means of a cable 60 to the print engine and control section 3 for bi-directional data signal transfer.

The print engine and control section 3 comprises a print engine and a controller 37 for controlling the printing process and scheduling the plurality of sheets, rolls in a printing order before they are separated from input holders 44, 45, 46. While the print engine is illustrated in FIG. 1 as one module, the number of modules of the print engine may be two, for example one module for printing on a front side and one module for printing on a back side of a sheet or roll respectively.

The controller 37 is a computer, a server or a workstation, connected to the print engine and connected to the digital environment of the printing system, for example a network N for transmitting a submitted print job to the printing system 1. In FIG. 1 the controller 37 is positioned inside the print engine and control section 3, but the controller 37 may also be at least partially positioned outside of and/or remote from the print engine and control section 3 in connection with the network N in a workstation N1.

The controller 37 comprises a print job receiving section 371 permitting a user to submit a print job to the printing system 1, the print job comprising image data to be printed and a plurality of print job settings. The controller 37 comprises a print job queue section 372 comprising a print job queue for print jobs submitted to the printing system 1 and scheduled to be printed. The controller 37 comprises a sheet or roll scheduling section 373 for determining for each of the plurality of sheets or rolls of the print jobs in the print job queue an entrance time in the paper path of the print engine and control section 3. The controller 37 comprises a component handling and printer configuration section 374 comprising a component handler and a printer configurator for creating and maintaining physical configurations according to the invention. The controller 37 comprises an authentication and authorization section 375 comprising a digital authenticator for verifying a user group for a physical configuration and a digital authorizator for creating and maintaining user groups for the configurations according to the invention.

Print media are located in the input section 4, marking material is located in a reservoir 39 near or in the print head or print assembly 31 of the print engine, finishing material located near the print head or print assembly 31 of the print engine or located in the output section 5 in finishing equipment 58. Therefore an output holder may also be configured as a finisher.

The paper path may comprise a plurality of paper path sections 32 - 35 for transporting the print media from an entry point 36 of the print engine and control section 3 along the print head or print assembly 31 to the inlet 53 of the output section 5. The paper path sections 32 - 35 may form a loop according to the present invention to enable the printing of a duplex print job and/or a mix-plex job, i.e. a print job comprising a mix of sheets intended to be printed partially in a simplex mode and partially in a duplex mode.

The print head or print assembly 31 is suitable for ejecting and/or fixing marking material to the print media. The print head or print assembly 31 may be positioned near the paper path section 34. The print head or print assembly 31 may be an inkjet print head, a direct imaging toner assembly or an indirect imaging toner assembly.

The input section 4 comprise at least two input holders 44, 45, 46 for holding the print media before transporting the sheets of the print media to the print engine and control section 3. Sheets of print media are separated from the input holders 44, 45, 46 and guided from the input holders 44, 45, 46 by guiding means 42, 43, 47 to an outlet 36 for entrance in the print engine and control section 3. Each input holder 44, 45, 46 may be used for holding a different kind of print media, i.e. sheets or rolls having different print media properties. While 3 input holders 44, 45, 46 are illustrated in FIG. 1, the number of input holders may include two, three, four or more input holders. While the input holders illustrated in FIG. 1 contain sheets, the number of input holders according to the invention may comprise input holders for containing rolls of image receiving material.

The local user interface 7 is suitable for displaying user interface windows for controlling the print job queue residing in the controller 37. The local user interface 7 may be used to submit print jobs to the print engine 31. According to another embodiment a computer N1 in the network N has a user interface for displaying and controlling the print job queue of the printing system 1. Another computer in the network N may be used as print job submission device according to the invention. On this computer relevant software like a printer driver for the printing system 1 may be installed. The computer N1 may also be configured as a job submission device according to the invention for the printing system 1.

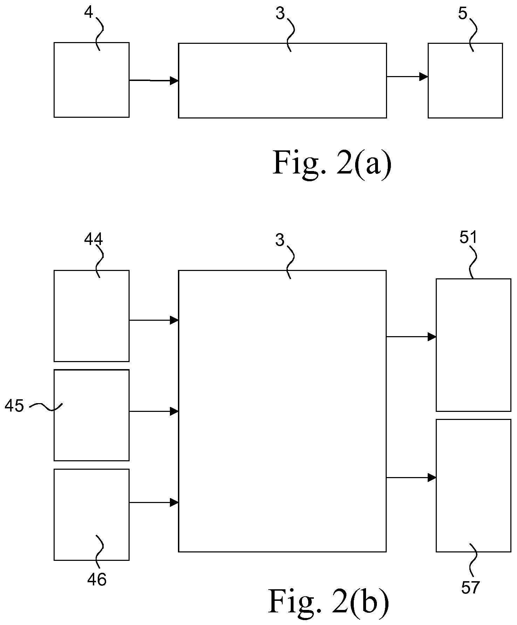

FIG. 2(a) schematically shows the sections 3, 4, 5 of the printing system 1 and the path a sheet needs to take from the input section 4 via the print engine and control section 3 to the output section 5. The scheduler 373 residing in the controller 37 as shown in FIG. 1 establishes the scheduling of the sheets or rolls in the printing system 1.

To model the printing system more accurately the plurality of input holders 44, 45, 46 in the input section 4 and the plurality of output holders 51, 57 in the output section 5 as also illustrated in FIG. 1 are shown separately in FIG. 2(b).

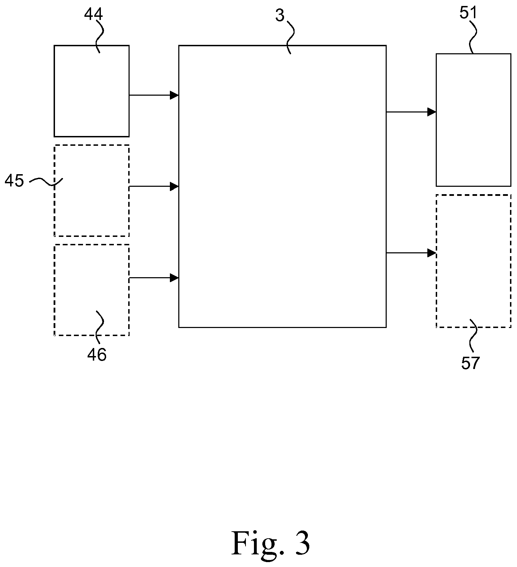

FIG. 3 shows a first physical configuration of the printing system 1 according to the invention. The first physical configuration of the printing system 1 comprises the input holder 44, the print engine 3 and the output holder 51. The dashed components 45, 46, 57 are part of the printing system 1, but not part of the first physical configuration.

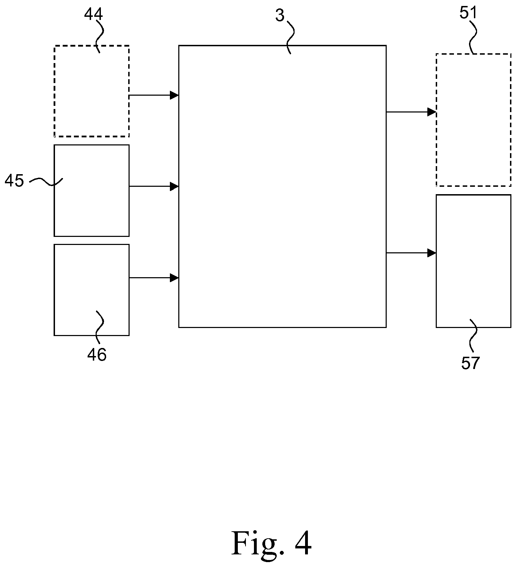

FIG. 4 shows a second physical configuration of the printing system 1. The second physical configuration of the printing system 1 comprises the input holders 45 and 46, the print engine 3 and the output holder 57. The dashed components 44, 51 are part of the printing system 1, but not part of the second physical configuration.

By doing so, two physical configurations of the printing system 1 are created which are disjunctive with respect to the input holders and with respect to the output holders. The only overlapping component of the two physical configurations in FIG. 3 and 4 is the print engine which is shared by the two physical configurations.

The division of the printing system 1 into physical configurations according to the invention may be done by a printer administrator component residing in the controller 37.

A next step is to create user groups for each physical configuration. For example, user group no 1 and user group no 2 are created. The digital authorizator 375 gets a request to link the user group no 1 to the first physical configuration via the user interface of the printing system from an administrator or an operator of the printing system. The digital authorizator 375 gets a list of the physical configurations from the system configurator 374. The operator or administrator selects the first physical configuration from the list. The user group no 1 is coupled to the first physical configuration and this coupling is stored by the system configurator 374. The system configuration 374 may provide configuration information to any module of the printing system based on a user group.

The user group no 1 comprising Mr. X and Mr. 707 is authorized to make use of the first physical configuration of the printing system as shown in FIG. 3. The user group no 2 comprising Mrs. Y and Mrs. K3-1 are authorized to make use of the second physical configuration of the printing system 1 as shown in FIG. 4.

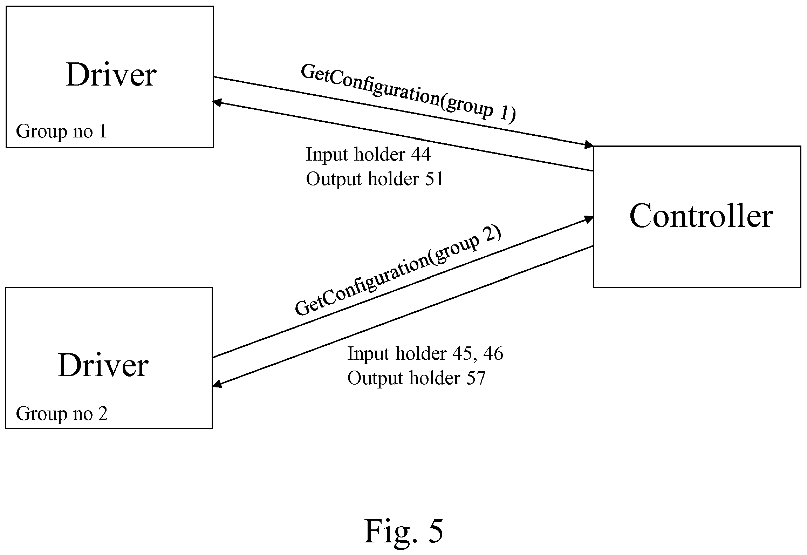

FIG. 5 shows a schematic diagram of the use of the two physical configurations of the printing system 1 according to the invention.

When Mr. X opens a printer driver for the printing system 1, the printer driver retrieves the user group of Mr. X, i.e. user group no 1, from the controller 37 - in particular the digital authorizator 375 and the system configurator 374 - of the printing system 1. The printer driver sends a command named GetConfiguration (group 1) to the controller 37 of the printing system 1. The configurator 374 receives the configuration request for user group no 1, retrieves in a look up table for example an ID number of the corresponding first physical configuration and returns digital data concerning the components of the first physical configuration, i.e. input holder 44 and output holder 51 to the printer driver.

When Mrs. Y opens a printer driver for the printing system 1, the printer driver retrieves the user group of Mrs. Y, i.e. user group no 2, from the controller 37 and sends a command named GetConfiguration (group 2) to the controller 37 of the printing system 1. The controller 37 receives the configuration request for user group no 2, retrieves in a look up table for example an ID number of the corresponding second physical configuration and returns digital data concerning the components of the second physical configuration, i.e. input holders 45, 46 and output holder 57 to the printer driver.

The digital data concerning the components of the appropriate physical configuration are used to configure the user interface windows shown via the printer driver to Mr. X and Mrs. Y respectively. The capabilities of each physical configuration are taken into account when configuring the user interface windows of the printer driver for a specific user group. So each user group sees only relevant input and output options and actions.

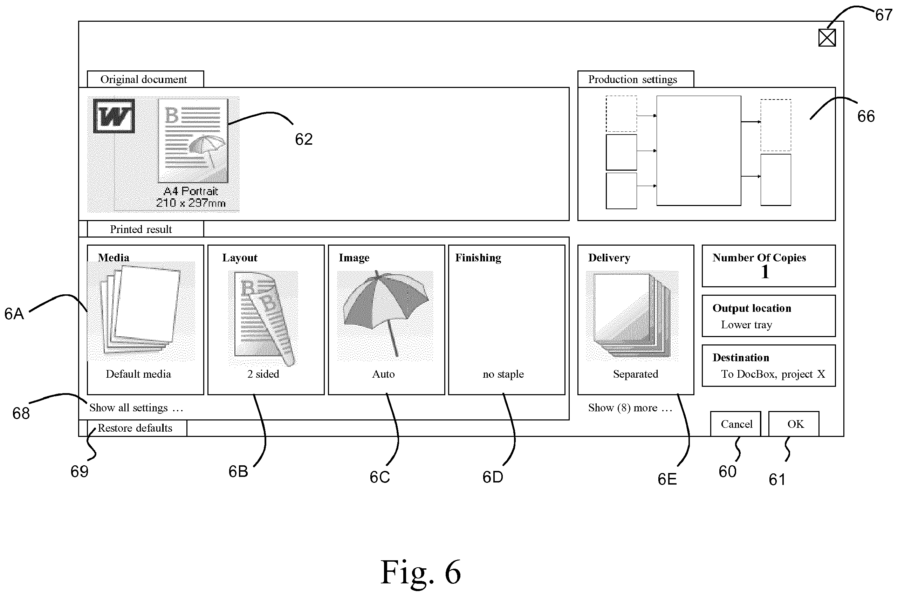

The user interface windows of a job submission device according to the invention will be further elaborated. The job submission device is suitable for displaying on a window a visual representation of the settings of the print job and for selecting values of the settings of the print job. FIG. 6 - 9 show windows to be displayed at the job submission device according to the invention. The job submission device may be a computer configured to use a printer driver for the printing system 1.

FIG. 6 shows a user interface window for a user of the user group no 2 for the second configuration shown in FIG. 4.

On a right top of the window in FIG. 6 a cross button 67 is displayed for leaving this window.

On a bottom right corner of the window a cancel button 60 is available also for leaving this window without saving any changes made on the window.

On the bottom right corner of the window a confirmation button 61 is available for confirming any changes made on the screen and saving these changes in the memory of the controller 37 of the printing system 1.

In a first segment of the window called "Original document" a, possible symbolic, image 62 of the at least one original document of the print job to be printed is shown. A size and an orientation of an original document are added in text format.

A second segment of the window called "Production settings" comprises an image 66 showing schematically the second configuration of the reproduction apparatus shown in FIG. 4, a delivery category button 6E showing a selected delivery category option ("Separated"), and three additional boxes for selecting a number of copies, an output location, e.g. a lower tray, and a destination, e.g. for scanning to a document box on a dedicated work station in case a scanner is part of the printing system (not shown). The lower tray corresponds to the output holder 57 in FIG. 1. The output holder 57 is part of the second configuration and is the only output holder of the second configuration, so the content of the box with the output location cannot be changed on this window.

The image 66 may help to recognize which configuration is available for the user group no 2. The image 66 shows the components of the second configuration with solid lines, while the components of any other configuration - i.e. the first configuration shown in FIG. 3 - are shown with dashed lines. The image 66 may be clicked on in order to zoom in at the components of the second configuration. Relevant information about this second configuration may additionally be displayed at the image 66, in the representation of the appropriate component, resulting in a virtual printer experience. Examples of configuration info are: identification, specification and status of a specific component such as a toner or ink status, media availability, staples availability, paper jams / errors, delivery location, etc.

In case of an important warning / error an alert bar may become visible at the image 66 in the second segment of the window on the appropriate component, attracting more attention to the status of the component. After clicking on the alert bar, again the representation of the component may become visible, but now with additional details on the warning/error. The additional details may be displayed in an additional info window.

A third segment of the window called "Printed result" comprises four settings category buttons 6A - 6D. A media category button 6A shows a selected media category option (i.e. "Default media"). In this case the default media is present in the input holder 45 or 46 being part of the second configuration. A layout category button 6B shows a selected layout category option (e.g. "2 sided"). An image category button 6C shows a selected image category option (i.e. "Auto"). A finishing category button 6D shows a selected finishing category option ("no staple").

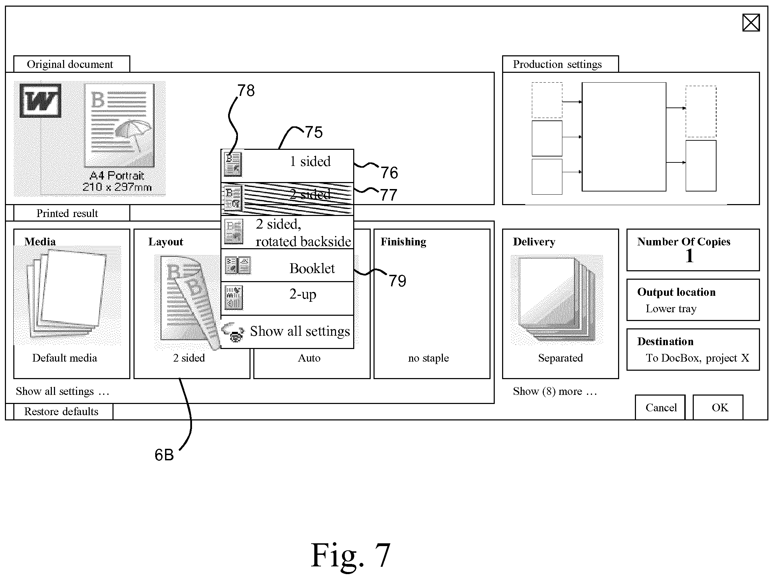

By activating a category button 6A - 6E a list (also referred to as a menu) of category options associated with the settings category is shown. In FIG. 7 the layout category button 6B has been activated, e.g. by touching or clicking, and the associated category option list 75 is shown. Each entry 76, 77 of the category option list is selectable. In FIG. 7 an area of a second entry 77 ("2 sided") is dashed, because it has been selected. This is also clear from the image on the layout category option button 6B ("2 sided") indicating the selected layout category option. A fourth entry 79 ("booklet") is selectable, since the lower tray, i.e. the output holder 57 in the printing system 1 is configured to have a finishing option of making a booklet (not shown in FIG. 1).

Each entry also comprises a distinguishing image 78 for a fast recognition of the intent of the category option by a user of the window.

Each entry 76, 77 of the list 75 may be selected to let the associated category option become the category option to be applied for the print job under execution and any subsequent print job as long as no other category option is selected.

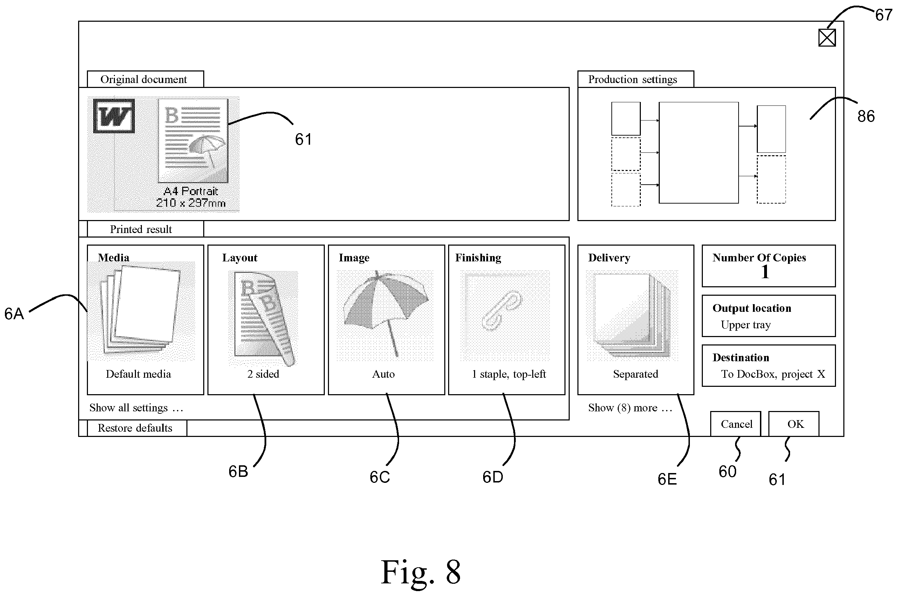

FIG. 8 shows a user interface window for a user of the user group no 1 for the first configuration shown in FIG. 3. The user interface window resembles the user interface window shown in FIG. 6 with some differences which will be explained hereinafter.

A second segment of the window called "Production settings" comprises an image 86 showing schematically the first configuration of the reproduction apparatus shown in FIG. 3, a delivery category button 6E showing a selected delivery category option ("Separated"), and three additional boxes for selecting a number of copies, an output location, e.g. an upper tray, and a destination, e.g. for scanning to a document box on a dedicated work station. The upper tray corresponds to the output holder 51 in FIG. 1. The output holder 51 is part of the first configuration and is the only output holder of the first configuration, so the content of the box with the output location cannot be changed on this window.

The image 86 may help to recognize which configuration is available for the user group no 1. The image 86 shows the components of the first configuration with solid lines, while the components of any other configuration - i.e. the second configuration shown in FIG. 4 - are shown with dashed lines. The image 86 may be clicked on in order to zoom in at the components of the first configuration. Relevant information about this first configuration may additionally be displayed at the image 86, in the representation of the appropriate component, resulting in a virtual printer experience. Examples of configuration info are: identification, specification and status of a specific component such as a toner or ink status, media availability, staples availability, paper jams / errors and delivery location.

In case of an important warning / error an alert bar may become visible at the image 86 in the second segment of the window on the appropriate component, attracting more attention to the status of the component. After clicking on the alert bar, again the representation of the component may become visible, but now with additional details on the warning/error. The additional details may be displayed in an additional info window.

A third segment of the window called "Printed result" comprises four settings category buttons 6A - 6D. A media category button 6A shows a selected media category option (i.e. "Default media"). In this case the default media is present in the input holder 44 being part of the first configuration. A layout category button 6B shows a selected layout category option (e.g. "2 sided"). An image category button 6C shows a selected image category option (i.e. "Auto"). A finishing category button 6D shows a selected finishing category option ("1 staple, top-left").

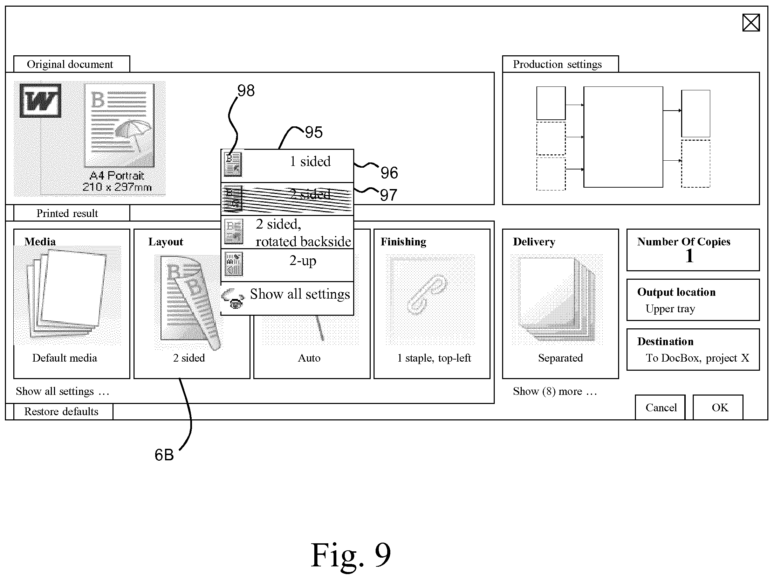

By activating a category button 6A - 6E a list (also referred to as a menu) of category options associated with the settings category is shown. In FIG. 9 the layout category button 6B has been activated, e.g. by touching or clicking, and the associated category option list 95 is shown. Each entry 96, 97 of the category option list is selectable. In FIG. 9 an area of a second entry 97 ("2 sided") is dashed, because it has been selected. This is also clear from the image on the layout category option button 6B ("2 sided") indicating the selected layout category option. An entry for defining a booklet as the fourth entry 79 ("booklet") on the user interface window in FIG 7 is missing in the list 95 on the user interface window in FIG. 9, since the first configuration does not facilitate a finishing option "booklet". Namely, the upper tray, i.e. the output holder 51 in the printing system 1 as shown in FIG. 1, has no finishing option of making a booklet, but only a stapling option by means of an in-line stapler 58 of printing system 1 as shown in FIG. 1. Each entry also comprises a distinguishing image 98 for a fast recognition of the intent of the category option by a user of the window.

Each entry 96, 97 of the list 95 may be selected to let the associated category option become the category option to be applied for the print job under execution and any subsequent print job as long as no other category option is selected.

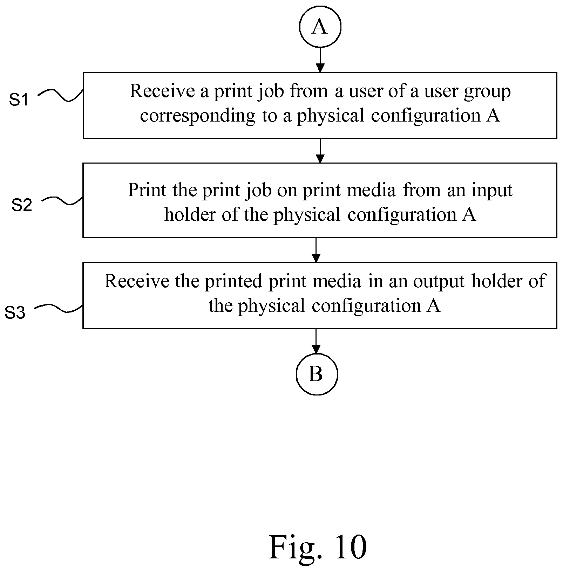

FIG. 10 is a flow diagram of an embodiment of the method according to the invention. The method starts in a start point A leading to a first step S1.

In the first step S1 a print job is received from a user of a user group corresponding to a particular physical configuration of a printing system according to the invention. The user may have used a remote user interface on a computer to submit the print job - for example via a printer driver, a job submission device or any other submission application - to the printing system. For convenience reasons, the physical configuration is indicated by the letter A in the flow diagram in FIG. 10.

In a second step S2 the print job is printed on print media from an input holder of the particular physical configuration of the printing system. If a kind of print media specified for the print job is not present in the input holder of the particular physical configuration of the printing system 1, the user is requested via the local user interface 7 of the printing system 1 to provide the input holder with the specified kind of print media, even when an input holder belonging to the another physical configuration has the kind of print media available in an input holder belonging to the other physical configuration. By doing so, mixing up print media between user groups is avoided.

In a third step S3 the printed print media is received in an output holder of the particular physical configuration of the printing system. The output holder holds the printed print media when the marking material has been disposed on the print media by the print engine and the printed print media is ready for taking out by an operator for further processing.

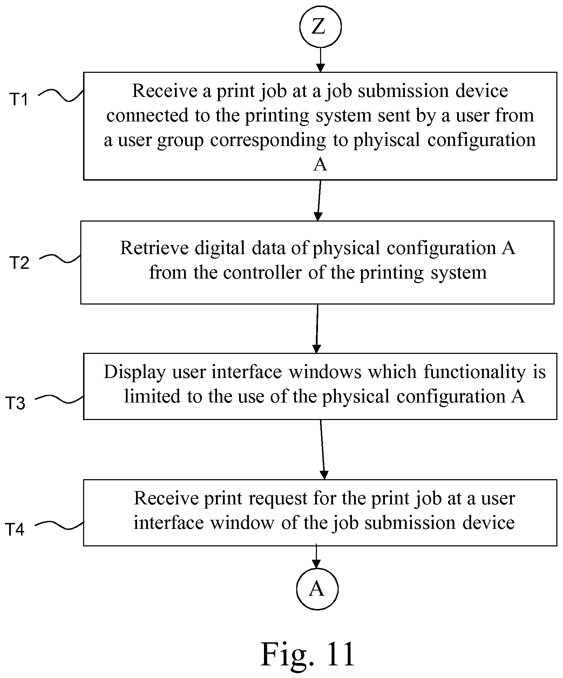

FIG. 11 shows a further embodiment of the method according to the invention wherein the steps S1 - S3 shown in FIG. 10 are preceded by the following steps.

The method starts in start point Z which leads to a first additional step T1.

In the first additional step T1 the print job is received at a job submission device according to the invention. The job submission device is connected via a wired or wireless network to the printing system according to the invention. The user of the job submission device belongs to a user group of a particular physical configuration of the printing system.

In a second additional step T2 digital data of the particular physical configuration of the printing system corresponding to the user group of the user is retrieved from a controller of the printing system by the job submission device. A request which mentions the user group in casu is sent to the controller and the controller sends the requested information of the particular physical configuration belonging to the user group to the job submission device.

In a third additional step T3 the job submission device displays and enables a use of functionality for job submission. The use of functionality for job submission is limited to job submission to the particular physical configuration. The use is facilitated by user interface windows which are limited to the capabilities of the particular physical configuration. User interface windows like the windows shown in FIG. 6 - 9 are dedicated for each user group and thus for each physical configuration corresponding to the user group. Then the user is able to enter print job settings on said user interface windows provided by the job submission device. Upon confirming a print request for the print job in a fourth additional step T4, for example by pressing a print button on a user interface window, the method proceeds to the starting point A in FIG. 10.

The digital data of the particular physical configuration may comprise an identification, a specification and a status of the at least one input holder of the particular physical configuration, and an identification, a specification and a status of the at least one output holder of the particular physical configuration.

The digital data may comprise an account log of the particular physical configuration. the account log may comprise marking material usage, number of sheets printed and total time spent printing on the particular configuration.

According to an embodiment an output holder of the printing system is not part of any created physical configuration. Such a module may be used by the operator to print test prints, print job properties sheets or error sheets.

For a print job submitted without a user group, an error message may be shown on the user interface of the printing system or in a driver screen. Also a default user group may be created for such print jobs which output will end up in the output holder of the printing system which is not part of any physical configuration.

The skilled person will recognise that other embodiments with respect to the printing system, the job submission device and the method are possible within the scope of the appended claims.

## Claims

1. A printing system (1) comprising a controller (37) for controlling the processing of print jobs, a plurality of input holders (44,45,46) for holding print media to be printed upon, a print engine (31) for disposing marking material on the print media, and a plurality of output holders (51, 57) for holding the print media when the marking material has been disposed on the print media by the print engine (31) and the print media is ready for taking out by an operator, wherein
the controller (37) is configured to establish and to maintain a plurality of physical configurations (66, 86) of the printing system, each physical configuration comprising the print engine, at least one input holder out of the plurality of input holders and at least one output holder out of the plurality of output holders, wherein each physical configuration is disjunctive from the at least one other physical configuration of the plurality of physical configurations with respect to the at least one input holder of the at least one other physical configuration of the plurality of physical configurations and with respect to the at least one output holder of the at least one other physical configuration of the plurality of physical configurations, wherein
the controller is configured to establish and to maintain a user group (1,2) of users, the user group is authorized to use one physical configuration of the printing system,
**characterized in that**
the printing system comprises a user interface (7) for creating a user group per established physical configuration of the printing system, wherein the user interface is configured to display dedicated user interface windows for a user group, each of the user interface windows comprising functionality limited to the physical configuration corresponding to the user group.

2. A printing system according to claim 1, wherein the plurality of input holders comprise roll holders for holding at least one roll of media.

3. A printing system according to any of the preceding claims, wherein the printing system comprises an output holder and a finisher of the printed print media, and the output holder is part of the finisher of the printed print media.

4. A printing system according to any of the preceding claims, wherein the printing system comprises an output holder which is not part of any established physical configuration, the output holder being used by the operator to print test prints, print job properties sheets or error sheets.

5. A printing system according to any of the preceding claims, wherein the printing system is configured to receive a print job from a job submission device which comprises a dedicated job submission window for each user group of users, the dedicated job submission window being limited to functionality with respect to the physical configuration corresponding to the user group.

6. Method for printing on a printing system according to any of the claims 1 - 5, wherein the method comprises the steps of
a) receiving a print job from a user of a user group corresponding to a particular physical configuration of the printing system,
b) printing the print job on print media from an input holder of the particular physical configuration of the printing system,
c) receiving the printed print media in an output holder of the particular physical configuration of the printing system, **characterized in that** the method comprises the steps of
d) establishing and maintaining a plurality of physical configurations of the printing system, each physical configuration comprising the print engine, at least one input holder out of the plurality of input holders and at least one output holder out of the plurality of output holders, wherein each physical configuration is disjunctive from the at least one other physical configuration of the plurality of physical configurations with respect to the at least one input holder of the at least one other physical configuration of the plurality of physical configurations and with respect to the at least one output holder of the at least one other physical configuration of the plurality of physical configurations,
e) establishing and maintaining a user group of users, the user group is authorized to use one physical configuration of the printing system, and
f) creating a user group per established physical configuration of the printing system,
wherein the method comprises the step of displaying dedicated user interface windows for the user group, each of the user interface windows comprising functionality limited to the physical configuration corresponding to the user group.

7. Method according to claim 6 for a printing system according to claim 5, wherein the method comprises the steps of
receiving a print job at the job submission device,
retrieving digital data of the particular physical configuration of the printing system corresponding to the user group of the user from a controller of the printing system by the job submission device, and
displaying and enabling by the job submission device of a use of functionality for job submission, the use being limited to job submission to the particular physical configuration.

8. Method according to claim 7, wherein the digital data of the particular physical configuration comprises an identification, a specification and a status of the at least one input holder of the particular physical configuration, and an identification, a specification and a status of the at least one output holder of the particular physical configuration.

9. Method according to claim 8, wherein the digital data comprises an account log of the particular physical configuration, the account log comprising marking material usage, number of sheets printed and total time spent printing on the particular configuration.

10. Method according to any of the claims 6 - 9, wherein the method comprises the step of receiving a print job submitted without a user group and showing an error message on the user interface of the printing system.

11. A software product comprising program code on a non-transitory computer-readable medium, wherein said program code, when loaded into a computer that is connected to a printing system according to any of the claims 1 - 5 causes the computer to act according to a method according to any of the claims 6 - 10.

## Patentansprüche

1. Drucksystem (1) mit einer Steuereinrichtung (37) zur Steuerung der Bearbeitung von Druckaufträgen, einer Vielzahl von Eingangsablagen (44, 45, 46) zur Aufnahme von Druckmedien, auf die gedruckt werden soll, einem Druckgerät (31) zum Aufbringen von Markierungsmaterial auf die Druckmedien und einer Vielzahl von Ausgangsablagen (51, 57) zur Aufnahme der Druckmedien, wenn das Markierungsmaterial durch das Druckgerät (31) auf dem Druckmedium aufgebracht worden ist und die Druckmedien bereit sind, von einem Operateur entnommen zu werden, wobei
die Steuereinrichtung (37) dazu konfiguriert ist, eine Vielzahl von physikalischen Konfigurationen (66, 86) des Drucksystems zu erstellen und zu unterhalten, wobei jede physikalische Konfiguration das Druckgerät, wenigstens eine Eingangsablage aus der Vielzahl der Eingangsablagen, und wenigstens eine Ausgangsablage aus der Vielzahl der Ausgangsablagen umfasst, wobei jede physikalische Konfiguration von der wenigstens einen anderen physikalischen Konfiguration aus der Vielzahl der physikalischen Konfigurationen im Hinblick auf die wenigstens eine Eingangsablage der wenigstens einen anderen physikalischen Konfiguration aus der Vielzahl der physikalischen Konfigurationen und im Hinblick auf die wenigstens eine Ausgangsablage der wenigstens einen anderen physikalischen Konfiguration aus der Vielzahl der physikalischen Konfigurationen geschieden ist,
wobei
die Steuereinrichtung dazu konfiguriert ist, eine Benutzergruppe (1, 2) von Benutzern zu erstellen und zu unterhalten, die Benutzergruppe dazu autorisiert ist, eine physikalische Konfiguration des Drucksystems zu benutzen,
**dadurch gekennzeichnet, dass**
das Drucksystem eine Benutzerschnittstelle (7) zum Erzeugen einer Benutzergruppe je erstellter physikalischer Konfiguration des Drucksystems aufweist, wobei die Benutzerschnittstelle dazu konfiguriert ist, spezifische Benutzerschnittstellenfenster für eine Benutzergruppe anzuzeigen, jedes der Benutzerschnittstellenfenster eine Funktionalität aufweist, die auf die physikalische Konfiguration beschränkt ist, die der Benutzergruppe entspricht.

2. Drucksystem nach Anspruch 1, bei dem die Vielzahl der Eingangsablagen Rollenhalter zum Halten wenigstens einer Medienrolle umfassen.

3. Drucksystem nach einem der vorstehenden Ansprüche, bei dem das Drucksystem eine Ausgangsablage und einen Finisher für die bedruckten Druckmedien aufweist und die Ausgangsablage Teil des Finishers für die bedruckten Druckmedien ist.

4. Drucksystem nach einem der vorstehenden Ansprüche, bei dem das Drucksystem eine Ausgangsablage aufweist, die nicht Teil irgendeiner erstellten physikalischen Konfiguration ist, wobei die Ausgangsablage von dem Operateur dazu benutzt wird, Testdrucke, Druckauftrageigenschaftsbögen oder Fehlerbögen zu drucken.

5. Drucksystem nach einem der vorstehenden Ansprüche, bei dem das Drucksystem dazu konfiguriert ist, einen Druckauftrag von einer Auftragseingabeeinrichtung zu empfangen, die ein spezifisches Auftragseingabefenster für jede Benutzergruppe von Benutzern aufweist, wobei das spezifische Auftragseingabefenster auf Funktionalität in Bezug auf die physikalische Konfiguration beschränkt ist, die der Benutzergruppe entspricht.

6. Verfahren zum Drucken auf einem Drucksystem nach einem der Ansprüche 1 bis 5, bei dem das Verfahren die folgenden Schritte aufweist:
a) empfangen eines Druckauftrags eines Benutzers aus einer Benutzergruppe, die einer speziellen physikalischen Konfiguration des Drucksystems entspricht,
b) drucken des Druckauftrags auf Druckmedien aus einer Eingangsablage aus der speziellen physikalischen Konfiguration des Drucksystems,
c) empfangen der bedruckten Druckmedien in einer Ausgangsablage aus der speziellen physikalischen Konfiguration des Drucksystems,
**dadurch gekennzeichnet, dass** das Verfahren die folgenden Schritte aufweist:
d) erstellen und unterhalten einer Vielzahl von physikalischen Konfigurationen des Drucksystems, wobei jede physikalische Konfiguration das Druckgerät, wenigstens eine Eingangsablage aus der Vielzahl der Eingangsablagen und wenigstens eine Ausgangsablage aus der Vielzahl der Ausgangsablagen umfasst, wobei jede physikalische Konfiguration von der wenigstens einen anderen physikalischen Konfiguration aus der Vielzahl der physikalischen Konfigurationen im Hinblick auf die wenigstens eine Eingangsablage der wenigstens einen anderen physikalischen Konfiguration aus der Vielzahl der physikalischen Konfigurationen und im Hinblick auf die wenigstens eine Ausgangsablage der wenigstens einen anderen physikalischen Konfiguration aus der Vielzahl der physikalischen Konfigurationen geschieden ist,
e) erstellen und unterhalten einer Benutzergruppe von Benutzern, wobei die Benutzergruppe dazu autorisiert ist, eine physikalische Konfiguration des Drucksystems zu benutzen, und
f) erzeugen einer Benutzergruppe je erstellter physikalischer Konfiguration des Drucksystems,
wobei das Verfahren den Schritt der Anzeige spezifischer Benutzerschnittstellenfenster je Benutzergruppe umfasst, wobei jedes Benutzerschnittstellenfenster Funktionalität aufweist, die auf die physikalische Konfiguration beschränkt ist, die der Benutzergruppe entspricht.

7. Verfahren nach Anspruch 6, für ein Drucksystem nach Anspruch 5, bei dem das Verfahren die folgenden Schritte umfasst:
empfangen eines Druckauftrags an der Auftragseingabeeinrichtung,
abrufen digitaler Daten über die spezielle physikalische Konfiguration des Drucksystems, die der Benutzergruppe der Benutzer entspricht, von einer Steuereinrichtung des Druckersystems durch die Auftragseingabeeinrichtung, und
Anzeige und Freigabe, durch die Auftragseingabeeinrichtung, der Benutzung von Funktionalität für eine Auftragseingabe, wobei die Benutzung auf Auftragseingaben für die spezielle physikalische Konfiguration beschränkt ist.

8. Verfahren nach Anspruch 7, bei dem die digitalen Daten der speziellen physikalischen Konfiguration eine Identifizierung, eine Spezifizierung und einen Status der wenigstens einen Eingangsablage der speziellen physikalischen Konfiguration sowie eine Identifizierung, eine Spezifizierung und einen Status der wenigstens einen Ausgangsablage der speziellen physikalischen Konfiguration umfassen.

9. Verfahren nach Anspruch 8, bei dem die digitalen Daten ein Kontoprotokoll der speziellen physikalischen Konfiguration umfassen, wobei das Kontoprotokoll die Verwendung von Markierungsmaterial, die Anzahl von gedruckten Bögen, und die für das Drucken in der speziellen Konfiguration aufgewendete Gesamtzeit umfasst.

10. Verfahren nach einem der Ansprüche 6 bis 9, bei dem das Verfahren den Schritt des Empfangs eines Druckauftrags, der ohne eine Benutzergruppe eingereicht wurde, und der Anzeige einer Fehlermeldung auf der Benutzerschnittstelle des Drucksystems umfasst.

11. Softwareprodukt mit Programmcode auf einem nichtflüchtigen, computerlesbaren Medium, wobei der Programmcode, wenn er in einen Computer geladen wird, der mit einem Drucksystem nach einem der Ansprüche 1 bis 5 verbunden ist, den Computer veranlasst, sich gemäß einem Verfahren nach einem der Ansprüche 6 bis 10 zu verhalten.

## Revendications

1. Système d'impression (1) comprenant un dispositif de commande (37) pour commander le traitement de travaux d'impression, une pluralité de supports d'entrée (44, 45, 46) pour soutenir des supports d'impression sur lesquels une impression doit être faite, un moteur d'impression (31) pour disposer un matériau de marquage sur les supports d'impression, et une pluralité de supports de sortie (51, 57) pour soutenir les supports d'impression lorsque le matériau de marquage a été disposé sur les supports d'impression par le moteur d'impression (31) et les supports d'impression sont prêts à être retirés par un opérateur, dans lequel
le dispositif de commande (37) est configuré pour établir et pour maintenir une pluralité de configurations physiques (66, 86) du système d'impression, chaque configuration physique comprenant le moteur d'impression, au moins un support d'entrée parmi la pluralité de supports d'entrée et au moins un support de sortie parmi la pluralité de supports de sortie, dans lequel chaque configuration physique est disjointe de l'au moins une autre configuration physique de la pluralité de configurations physiques par rapport à l'au moins un support d'entrée de l'au moins une autre configuration physique de la pluralité de configurations physiques et par rapport à l'au moins un support de sortie de l'au moins une autre configuration physique de la pluralité de configurations physiques, dans lequel
le dispositif de commande est configuré pour établir et pour maintenir un groupe utilisateur (1, 2) d'utilisateurs, le groupe utilisateur est autorisé à utiliser une configuration physique du système d'impression,
**caractérisé en ce que**
le système d'impression comprend une interface utilisateur (7) pour créer un groupe utilisateur par configuration physique établie du système d'impression, dans lequel l'interface utilisateur est configurée pour afficher des fenêtres d'interface utilisateur dédiées pour un groupe utilisateur, chacune des fenêtres d'interface utilisateur comprenant une fonctionnalité limitée à la configuration physique correspondant au groupe utilisateur.

2. Système d'impression selon la revendication 1, dans lequel la pluralité de supports d'entrée comprend des supports de rouleau pour soutenir au moins un rouleau de supports.

3. Système d'impression selon l'une quelconque des revendications précédentes, dans lequel le système d'impression comprend un support de sortie et un finisseur des supports d'impression imprimés, et le support de sortie fait partie du finisseur des supports d'impression imprimés.

4. Système d'impression selon l'une quelconque des revendications précédentes, dans lequel le système d'impression comprend un support de sortie qui ne fait partie d'aucune configuration physique établie, le support de sortie étant utilisé par l'opérateur pour imprimer des impressions d'essai, des feuilles de propriétés de travaux d'impression ou des feuilles d'erreur.

5. Système d'impression selon l'une quelconque des revendications précédentes, dans lequel le système d'impression est configuré pour recevoir un travail d'impression d'un dispositif de soumission de travail qui comprend une fenêtre de soumission de travail dédiée pour chaque groupe utilisateur d'utilisateurs, la fenêtre de soumission de travail dédiée étant limitée à une fonctionnalité par rapport à la configuration physique correspondant au groupe utilisateur.

6. Procédé d'impression d'un système d'impression selon l'une quelconque des revendications 1 à 5, dans lequel le procédé comprend les étapes consistant à
a) recevoir un travail d'impression d'un utilisateur d'un groupe utilisateur correspondant à une configuration physique particulière du système d'impression,
b) imprimer le travail d'impression sur des supports d'impression d'un support d'entrée de la configuration physique particulière du système d'impression,
c) recevoir les supports d'impression imprimés dans un support de sortie de la configuration physique particulière du système d'impression, **caractérisé en ce que** le procédé comprend les étapes consistant à
d) établir et maintenir une pluralité de configurations physiques du système d'impression, chaque configuration physique comprenant le moteur d'impression, au moins un support d'entrée parmi la pluralité de supports d'entrée et au moins un support de sortie parmi la pluralité de supports de sortie, dans lequel chaque configuration physique est disjointe de l'au moins une autre configuration physique de la pluralité de configurations physiques par rapport à l'au moins un support d'entrée de l'au moins une autre configuration physique de la pluralité de configurations physiques et par rapport à l'au moins un support de sortie de l'au moins une autre configuration physique de la pluralité de configurations physiques,
e) établir et maintenir un groupe utilisateur d'utilisateurs, le groupe utilisateur est autorisé à utiliser une configuration physique du système d'impression, et
f) créer un groupe utilisateur par configuration physique établie du système d'impression,
dans lequel le procédé comprend l'étape consistant à afficher des fenêtres d'interface utilisateur dédiées pour le groupe utilisateur, chacune des fenêtres d'interface utilisateur comprenant une fonctionnalité limitée à la configuration physique correspondant au groupe utilisateur.

7. Procédé selon la revendication 6 pour un système d'impression selon la revendication 5, dans lequel le procédé comprend les étapes consistant à
recevoir un travail d'impression au niveau du dispositif de soumission de travail,
extraire des données numériques de la configuration physique particulière du système d'impression correspondant au groupe utilisateur de l'utilisateur depuis un dispositif de commande du système d'impression par le dispositif de soumission de travail, et
afficher et activer, par le dispositif de soumission de travail, une utilisation de fonctionnalité pour la soumission de travail, l'utilisation étant limitée à la soumission de travail à la configuration physique particulière.

8. Procédé selon la revendication 7, dans lequel les données numériques de la configuration physique particulière comprennent une identification, une spécification et un statut de l'au moins un support d'entrée de la configuration physique particulière, et une identification, une spécification et un statut de l'au moins un support de sortie de la configuration physique particulière.

9. Procédé selon la revendication 8, dans lequel les données numériques comprennent un registre de compte de la configuration physique particulière, le registre de compte comprenant un usage de matériau de marquage, un nombre de feuilles imprimées et un temps total d'impression sur la configuration particulière.

10. Procédé selon l'une quelconque des revendications précédentes 6 à 9, dans lequel le procédé comprend l'étape consistant à recevoir un travail d'impression soumis sans un groupe utilisateur et à montrer un message d'erreur sur l'interface utilisateur du système d'impression.

11. Produit logiciel comprenant un code de programme sur un support non transitoire lisible par ordinateur, dans lequel ledit code de programme, lorsqu'il est chargé sur un ordinateur qui est connecté à un système d'impression selon l'une quelconque des revendications 1 à 5, entraîne l'ordinateur à agir selon un procédé selon l'une quelconque des revendications 6 à 10.
